# EUROPEAN PATENT APPLICATION

(11) **EP 2 736 125 A1**
(43) Date of publication of application: **28.05.2014**
(21) Application number: 13250113.1
(22) Date of filing: 26.11.2013
(51) Int. Cl.: H01R 13/516, H01R 13/66

(54) **Component module, mating connector, and connection structure between component module and mating connector**

(30) Priority: 27.11.2012 JP 2012259028
(71) Applicant: Hosiden Corporation, Yao-shi, Osaka 581-0071 (JP)
(72) Inventor: Sasaki, Daisuke, Yao-shi, Osaka, 581-0071 (JP); Nagata, Takayuki, Yao-shi, Osaka, 581-0071 (JP)
(74) Representative: Beresford, Keith Denis Lewis

(57) **Abstract**

A component module is disclosed that can be manufactured with a reduced number of components and reduced man-hours for assembling. The component module M includes a case 100, a circuit board 200, an electronic component 300, and a connector 400. The case 100 has a through-hole 111. The circuit board 200 is provided in the case 100. The electronic component 300 and the connector 400 are mounted on the circuit board 200. The connector 400 includes a connecting portion 411 and terminals 420, a portion of which is located at the connecting portion 411. The connecting portion 411 is opposed to the through-hole 111 of the case 100.

## Description

The invention relates to component modules, mating connectors, and connection structures between the component modules and the mating connectors.

A conventional component module as described in WO 2005/109579 includes a case, a plurality of connection terminals, a flexible flat cable, and a camera unit. The connection terminals extend through the case. The camera unit is disposed in the case. The flexible flat cable connects between the connection terminals and the camera unit in the case.

The component module requires the flexible flat cable to connect between the connection terminals and the camera unit, leading to increased number of components constituting the module and increased man-hours for assembling the module.

In view of the above circumstances, the invention is conceived to provide a component module, a mating connector, and a connection structure between the component module and the mating connector.

A component module of the invention includes a case, a circuit board, an electronic component, and a connector. The case has a through-hole. The circuit board is provided in the case. The electronic component and the connector are mounted on the circuit board. The connector includes a connecting portion and a terminal. The connecting portion is opposed to or located inside the through-hole of the case. At least a portion of the terminal is located at the connecting portion.

In the component module of this aspect of the invention, the connecting portion of the connector is opposed to or located inside the through-hole of the case, making it possible to connect a mating connector to the portion of the terminal of the connecting portion of the connector through the through-hole of the case. The connector is directly mounted on the circuit board in the case, making it possible to omit a component for connecting the connector to the circuit board. As a result, this aspect of the invention can reduce the number of components and the number of man-hours for assembling the component module.

The connecting portion may have a connection hole. The portion of the terminal may be located in the connection hole of the connecting portion.

The terminal may include first and second arms, a first contact portion, and a second contact portion. The first contact portion may be provided at the first arm and located in the connection hole of the connecting portion. The second contact portion may be provided at the second arm and located in the connection hole of the connecting portion. The first and second contact portions may be configured to receive therebetween a connecting circuit board of a mating connector such that the first contact portion is elastically contactable with a first conductor on a first face in a thickness direction of the connecting circuit board and the second contact portion is elastically contactable with a second conductor on a second face of the connecting circuit board in the thickness direction.

In the component module of this aspect, when the connecting circuit board of a mating connector is inserted into the connection hole of the connector, the first and second contact portions of the terminal elastically contact the first and second conductors of the connecting circuit board and elastically hold therebetween the connecting circuit board. This arrangement can absorb the wobbling of the mating connector in the thickness direction when inserting the connecting circuit board of the mating connector into the connection hole of the connector. Moreover, the first and second contact portions of the terminal elastically contact the first conductor and the second conductor, respectively, of the connecting circuit board. This arrangement can maintain the contact state between the first and second contact portions of the terminal and the first and second conductors of the connecting circuit board even when the connected mating connector and component module are under physical shock and/or vibration. Accordingly, this aspect of the invention provides improved reliability of connection between the mating connector and the component module.

The case may include a first case having the through-hole and a second case configured to be fixed to the first case. The circuit board of the component module may be fixed to at least one of the first case and the second case.

In the component module of this aspect, it is easy to mount the circuit board, the electronic component, and the connector into the first and second cases.

The circuit board of the component module may include a first face and a second face on the opposite side to the first face. The electronic component may be mounted on the first face. The connector of the component module may be mounted on the second face.

The component module of this aspect includes the electronic component and the connector mounted on the different faces of the circuit board, minimizing the outer dimensions of the circuit board. The component module can thus be miniaturized.

The case may further include a guide in the form of a protrusion or a recess around the through-hole. The guide may include a first end and a second end on the opposite side to the first end. The second end may be of different shape from the first end.

The component module of this aspect includes the first and second ends of the guide of different shape, preventing insertion of the mating connector into the guide in a wrong orientation.

The electronic component may be an automotive electrical component.

The mating connector according to the invention is connectable to the component module described above. The mating connector includes a connecting circuit board. The connecting circuit board is insertable through the through-hole of the case of the component module into the connection hole of the connector of the component module. The connecting circuit board includes a conductor on a face of the connecting circuit board. The conductor is contactable with the portion of the terminal in the connection hole.

In the mating connector of this aspect, the connecting circuit board serves as a connecting member for the connector of the component module. Therefore, as compared to the situation where the mating connector is provided with a terminal contactable with the terminal of the connector of the component module, the mating connector can be manufactured with a reduced number of components and reduced man-hours for assembly.

The connecting circuit board may alternatively include a first face in the thickness direction, a second face on the opposite side to the first face, a first conductor, and a second conductor. The first conductor may be provided on the first face of the connecting circuit board and contactable with the first contact portion in the connection hole. The second conductor may be provided on the second face of the connecting circuit board and contactable with the second contact portion in the connection hole.

In the mating connector of this aspect, when inserting the connecting circuit board into the connection hole of the connector of the component module, the first and second conductors on the connecting circuit board are brought into contact with the first and second contact portions of the terminal of the connector of the component module. Therefore, this aspect of the invention can improve the reliability of connection between the mating connector and the component module.

The first conductor of the connecting circuit board may have larger lengthwise and widthwise dimensions than those of the first contact portion. The second conductor of the connecting circuit board may have larger lengthwise and widthwise dimensions than those of the second contact portion.

The mating connector of this aspect can absorb the wobbling of the first and second conductors of the mating connector in their lengthwise and widthwise directions when inserting the connecting circuit board into the connection hole of the connector of the component module. Moreover, the mating connector can maintain the contact state between the first and second contact portions of the terminal of the component module and the first and second conductors of the mating connector, even when the mating connector and the component module are under physical shock and/or vibration from outside, with the first and second conductors in contact with the first and second contact portions, resulting in that the first and second conductors relatively move in the widthwise and/or lengthwise directions of the first and second conductors with respect to the first and second contact portions. Therefore, this aspect of the invention can improve the reliability of connection between the mating connector and the component module.

A connection structure for a component module and a mating connector according to the invention includes a component module and a mating connector. The component module includes a case, a circuit board, an electronic component, and a connector. The case has a through-hole. The circuit board is provided in the case. The electronic component and the connector are mounted on the circuit board. The connector of the component module includes a connecting portion, a connection hole provided in the connecting portion, and a terminal. The connecting portion is opposed to or located inside the through-hole of the case. At least a portion of the terminal is located at the connecting portion. The mating connector includes a connecting circuit board. The connecting circuit board is insertable through the through-hole of the case of the component module into the connection hole of the connector of the component module. The connecting circuit board includes a conductor on a face of the connecting circuit board. The conductor is contactable with the portion of the terminal in the connection hole.

In the connection structure of this aspect, the connecting portion of the connector of the component module is opposed to or located inside the through-hole of the case, so that the connecting circuit board of the mating connector can be connected to the terminal of the connecting portion of the connector through the through-hole of the case. The connector of the component module is directly mounted on the circuit board in the case, making it possible to omit a component for connecting the connector to the circuit board. As a result, this aspect of the invention can reduce the number of components and the number of man-hours for assembling the component module. Further advantageously, the connecting circuit board of the mating connector serves as a connecting member for the connector of the component module. Therefore, as compared to the situation where the mating connector is provided with a terminal contactable with the terminal of the connector of the component module, the mating connector can be manufactured with a reduced number of components and reduced man-hours for assembly.

The terminal may include first and second arms, a first contact portion, and a second contact portion. The first contact portion may be provided at the first arm and located in the connection hole of the connecting portion. The second contact portion may be provided at the second arm and located in the connection hole of the connecting portion. The face of the connecting circuit board may include a first face in a thickness direction of the connecting circuit board and a second face on the opposite side to the first face. The conductor may include a first conductor and a second conductor. The first conductor may be provided on the first face of the connecting circuit board and contactable with the first contact portion in the connection hole. The second conductor may be provided on the second face of the connecting circuit board and contactable with the second contact portion in the connection hole.

In the connection structure of this aspect, when the connecting circuit board of the mating connector is inserted into the connection hole of the connector, the first and second contact portions of the terminal elastically contact the first and second conductors of the connecting circuit board and elastically hold therebetween the connecting circuit board. This arrangement can absorb the wobbling of the mating connector in the thickness direction when inserting the connecting circuit board of the mating connector into the connection hole of the connector. Moreover, the first and second contact portions of the terminal elastically contact the first conductor and the second conductor, respectively, of the connecting circuit board. Accordingly, this aspect of the invention provides improved reliability of connection between the mating connector and the component module.

The first conductor may have larger lengthwise and widthwise dimensions than those of the first contact portion. The second conductor may have larger lengthwise and widthwise dimensions than those of the second contact portion.

The connection structure of this aspect can absorb the wobbling of the first and second conductors of the mating connector in their lengthwise and widthwise directions when inserting the connecting circuit board of the mating connector into the connection hole of the connector of the component module. Moreover, the connection structure can maintain the contact state between the first and second contact portions of the terminal of the component module and the first and second conductors of the mating connector, even when the mating connector and the component module are under physical shock and/or vibration from outside, with the first and second conductors in contact with the first and second contact portions, resulting in that the first and second conductors relatively move in the widthwise and/or lengthwise directions of the first and second conductors with respect to the first and second contact portions. Therefore, this aspect of the invention can further improve the reliability of connection between the mating connector and the component module.

The case may further include a guide in the form of a protrusion or a recess around the through-hole. The guide may include a first end and a second end on the opposite side to the first end. The second end may be of different shape from the first end. The mating connector may include a first end and a second end on the opposite side to the first end of the mating connector. The first end may have an outer shape conforming to an inner shape of the first end of the guide. The second end may have an outer shape conforming to an inner shape of the second end of the guide.

In the connection structure of this aspect, when a user tries to insert the second end of the mating connector into the first end of the guide of the component module and insert the first end of the mating connector into the second end of the guide, one of the first and second ends of the mating connector abuts one of the first and second ends of the guide of the component module, preventing the insertion of the mating connector into the guide. Therefore, this aspect of the invention can prevent insertion of the mating connector in the inverted orientation.

The mating connector may further include a sealing member in the form of a loop-shaped elastic body to receive the connecting circuit board. The sealing member may be pressed onto the case of the component module when the connecting circuit board is received in the connection hole of the connector of the component module.

The connection structure of this aspect can improve the waterproofness between the mating connector and the component module.

The connection structure of any of the above aspects may further include a fastener. The fastener may fasten to the case the mating connector as received in the through-hole of the case of the component module and connected to the connecting portion of the connector of the component module.

As the fastener fixes the mating connector to the case of the component module and maintains this state, the connection structure of this aspect can further improve the reliability of connection between the mating connector and the component module.

The electronic component may be an automotive electrical component.

The invention will now be described by way of example only and without limitation by reference to the drawings, in which:
Fig. 1 is a schematic perspective view of a connection structure between a component module and a mating connector in accordance with an embodiment of the invention;
Fig. 2 is a sectional view of the connection structure taken along 2-2 in Fig. 1;
Fig. 3 is a front, top, right side perspective view of a component module in accordance with an embodiment of the invention;
Fig. 4A is a sectional view of the component module taken along 4A-4A in Fig. 3;
Fig. 4B is a sectional view of the component module taken along 4B-4B in Fig. 3;
Fig. 5A is an exploded perspective view of the component module from the front, top, right side;
Fig. 5B is an exploded perspective view of the component module from the back, top, left side;
Fig. 6 is a front, top, right side perspective view of a mating connector in accordance with an embodiment of the invention;
Fig. 7A is a sectional view of the mating connector taken along 7A-7A in Fig. 6;
Fig. 7B is a sectional view of the mating connector taken along 7B-7B in Fig. 6;
Fig. 8A is a view illustrating how first contact portions of terminals of a connector of the component module are connected to first conductors on a connecting circuit board of the mating connector; and
Fig. 8B is a view illustrating how second contact portions of terminals of the connector of the component module are connected to second conductors on the connecting circuit board of the mating connector.

In the brief description of drawings above and the description of embodiments which follows, relative spatial terms such as "top", "bottom", "left", "right", "front", "rear", "back", etc., are used for the convenience of the skilled reader and refer to the orientation of the component module, the mating connector, the connection structure between the component module and the mating connector, and their constituent parts as depicted in the drawings. No limitation is intended by use of these terms, either in use of the invention, during its manufacture, shipment, custody, or sale, or during assembly of its constituent parts or when incorporated into or combined with other apparatus.

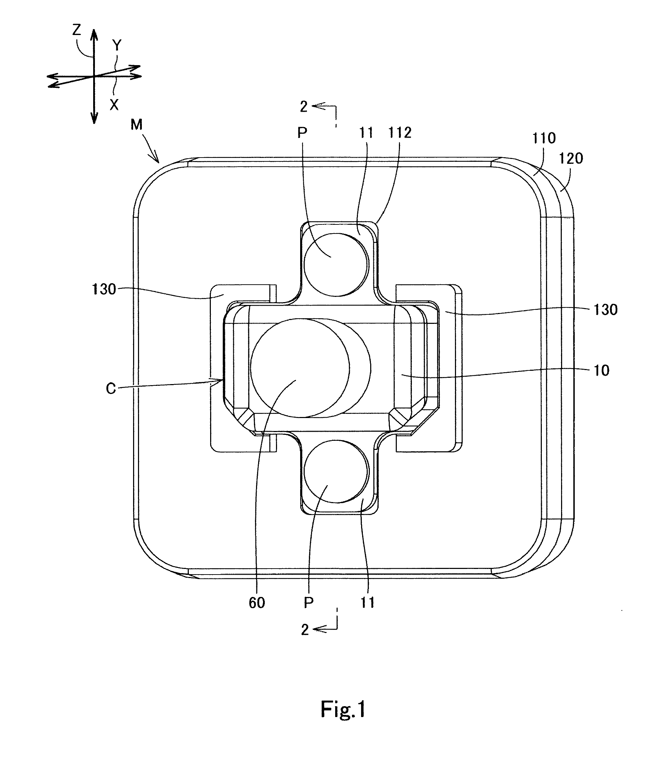

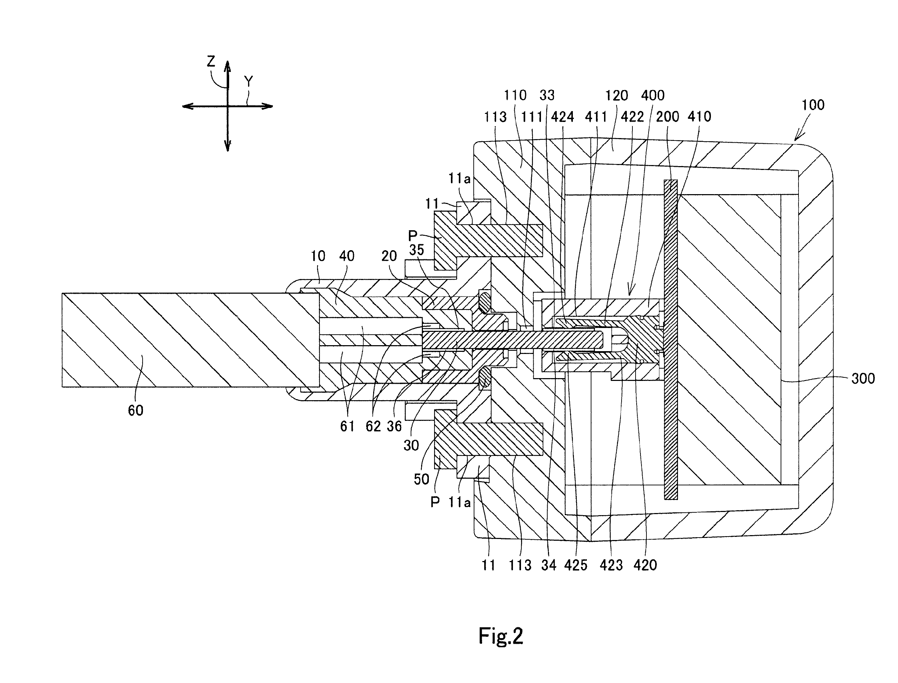

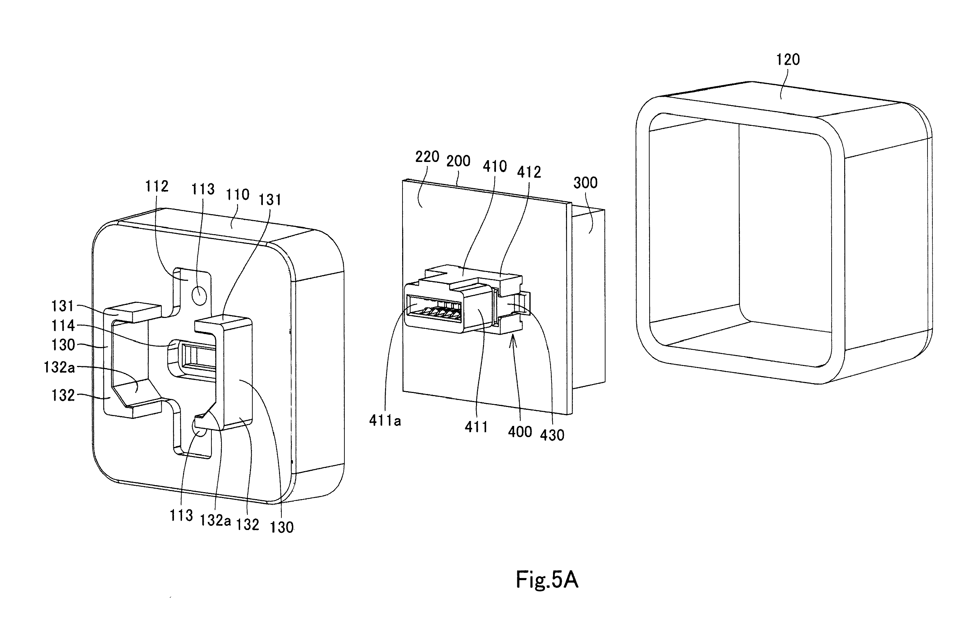

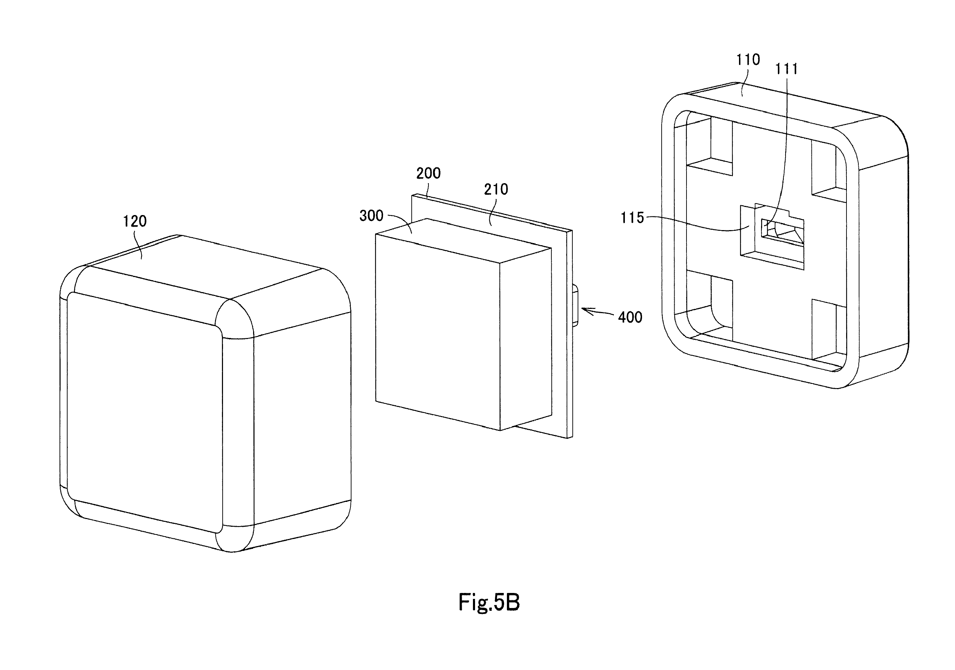

A connection structure between a component module and a mating connector in accordance with an embodiment of the invention will be described below with reference to Fig. 1 to Fig. 8B. The connection structure shown in Fig. 1 and Fig. 2 includes a component module M, a mating connector C, and two fasteners P. The component module M, the mating connector C, and the fasteners P will be described below in detail. The Y direction shown in Figs. 1, 2, 4A, 4B, 7A, and 7B is a direction in which the component module M and the mating connector C are inserted/detached and also the length direction of the component module M and the mating connector C. The X direction shown in Figs. 1, 4B and 7B is the width direction of the component module M and the mating connector C. The Z direction shown in Figs. 1, 2, 4A, and 7A is the height direction of the component module M and the mating connector C.

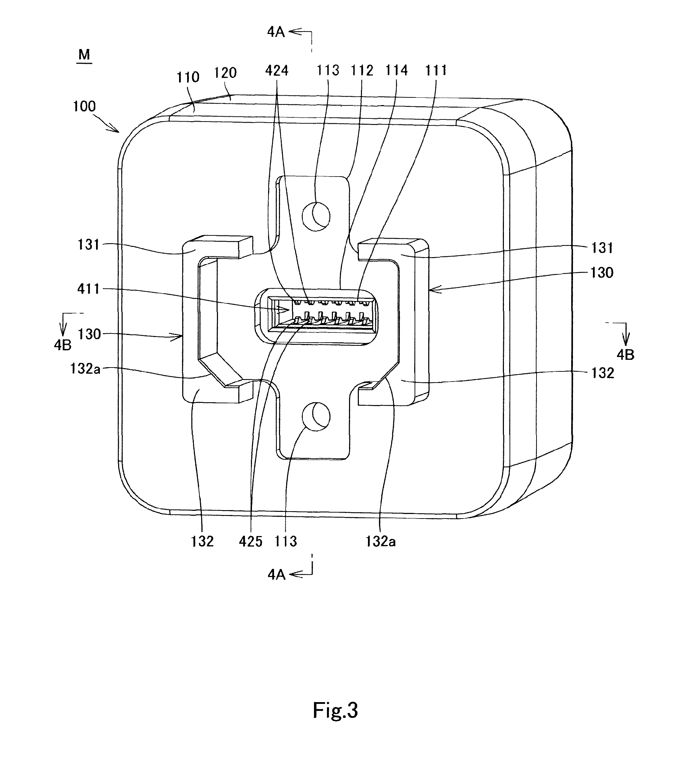

The component module M will be described below with reference to Fig. 3 to 5B. The component module M includes a case 100, a built-in circuit board 200 (corresponding to the circuit board of the component module as defined in the claims), an electronic component 300, and a built-in connector 400 (corresponding to the connector of the component module as defined in the claims).

As shown in Fig. 3 to 5B, the case 100 includes a first case 110, a second case 120, and two guides 130.

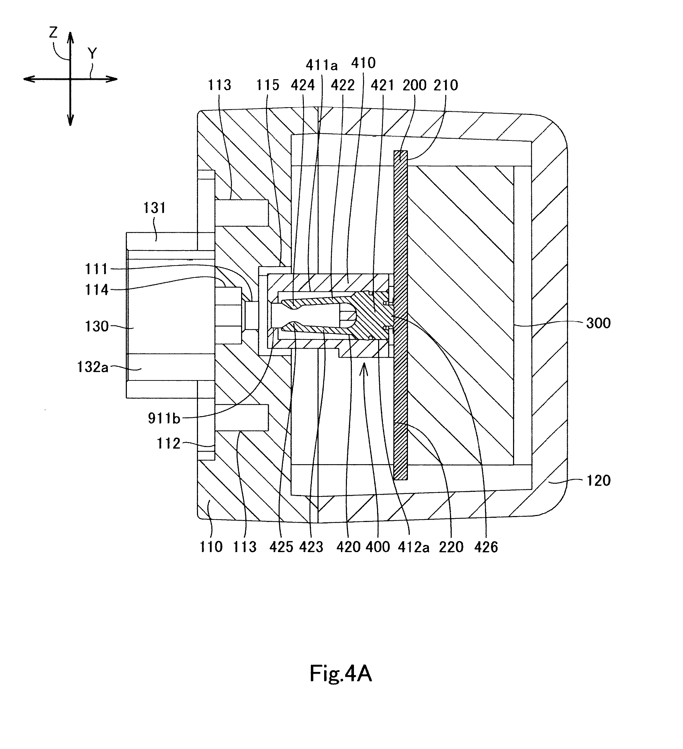

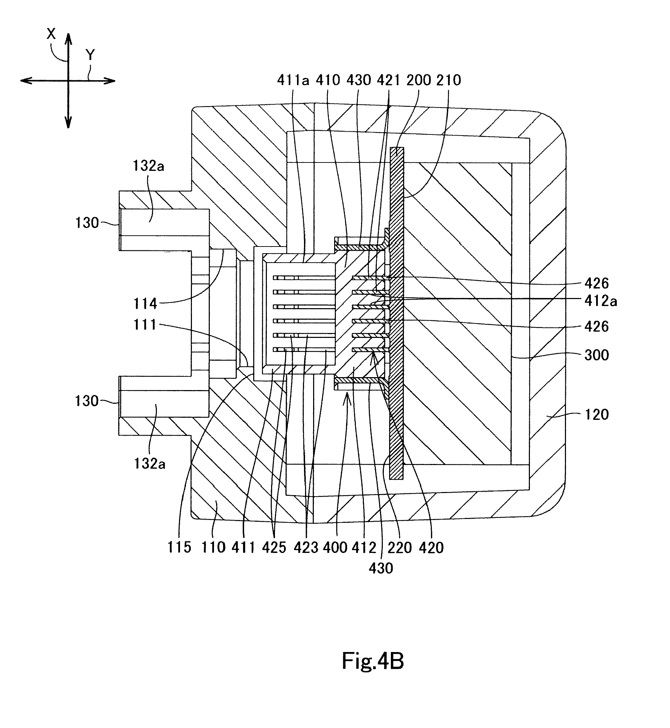

The first case 110 is a generally rectangular box. The first case 110 includes a bottom and a peripheral wall standing along the periphery of the bottom. The outer face of the bottom of the first case 110 is provided with a fitting recess 112. The guides 130 are provided on the outer face of the bottom of the first case 110, more particularly on one and the other sides in the X direction of the fitting recess 112. As best shown in Fig. 3, the guides 130 are protrusions of generally lateral U-shape. The guides 130 each have a first end 131 on one side in the Z direction and a second end 132 on the other side in the Z direction (on the opposite side to the first end 131). The first and second ends 131, 132 are of different shape from each other. Specifically, the first end 131 is of generally L-shape, while the second end 132 includes an oblique portion 132a formed on the inner side of a generally L-shaped corner. A generally rectangular housing recess 114 is provided centrally in the bottom of the fitting recess 112. Generally cylindrical attachment holes 113 are provided at opposite Z-direction ends on the bottom of the fitting recess 112. As shown in Fig. 4A and 4B, a generally rectangular housing recess 115 is provided centrally in the inner face of the bottom of the first case 110. A through-hole 111 (corresponding to the through-hole of the case as defined in the claims) extends from the bottom of the housing recess 114 to the bottom of the housing recess 115. The through-hole 111 is a generally rectangular hole of smaller inner dimensions than those of each housing recess 114, 115.

The second case 120 is a generally rectangular box for combination with the first case 110 in the Y direction. The second case 120 includes a bottom and a peripheral wall standing along the periphery of the bottom. The peripheral wall of the second case 120 is fixed to the peripheral wall of the first case 110. The inner space of the combined first and second cases 100, 200 houses the circuit board 200, the electronic component 300, and the connector 400.

The circuit board 200 is a printed circuit board as shown in Figs. 4A to 5B. The circuit board 200 has a first face 210 and a second face 220 on the opposite side to the first face 210. The circuit board 200 is fixed to the second case 120 such that the second face 220 faces the bottom of the first case 110 and the first face 210 faces the bottom of the second case 120.

The electronic component 300 as shown in Figs. 3 to 5B is an automotive electrical component mounted on the first face 210 of the circuit board 200. Specifically, the electronic component 300 is a camera unit used to photograph the rear and/or surrounding areas of an automobile.

The connector 400 is mounted on the second face 220 of the circuit board 200 as shown in Figs. 4A to Fig. 5B. The connector 400 includes a body 410, a plurality of terminals 420, and a pair of fixed terminals 430. The body 410 is made of insulating resin. The body 410 includes a connecting portion 411 and a base 412. The base 412 is a rectangular block. The base 412 is provided with a plurality of slits 412a arranged at intervals along the X direction as shown in Fig. 4B. The slits 412a extend in the Y direction through the base 412 as shown in Fig. 4A. The connecting portion 411 is a square tube provided contiguously with a Y-direction end of the base 412. The connecting portion 411 is located such that one Y-direction end (distal portion) is housed in the housing recess 115 of the first case 110 and faces the through-hole 111. More specifically, the circuit board 200 is fixed to the second case 120 such that the distal portion of the connecting portion 411 is housed in the housing recess 115 and faces the through-hole 111. The connecting portion 411 has a connection hole 411 a. The connection hole 411 a communicates with the slits 412a of the base 412 and is open at one end face in the Y direction (front face) of the connecting portion 411. The opening of the connection hole 411 a faces the through-hole 111.

The terminals 420 are metal plates of generally C-shape as shown in Figs. 4A and 4B. The terminals 420 each include a terminal body 421, first and second arms 422, 423, first and second contact portions 424, 425, and a tail 426. Each terminal body 421 is a generally rectangular plate with locking claws at opposite Z-direction ends. Each terminal body 421 (including the locking claws) has a slightly larger Z-direction dimension than that of each slit 412a. The terminal bodies 421 are thus adapted to be securely press-fitted in the respective slits 412a in the base 412 of the body 410.

The first and second arms 422, 423 are contiguous with one Y-direction end of the terminal body 421 and extend to one Y-direction side and substantially in parallel to each other. The first contact portion 424 is provided at one Y-direction end (front end) of each first arm 422. Each first contact portion 424 is a protrusion projecting to the other Z-direction side. The second contact portion 425 is provided at one Y-direction end (front end) of each second arm 423. Each second contact portion 425 is a protrusion projecting to the one Z-direction side. The first and second arms 422, 423 are elastically deformable in directions away from each other. The first and second contact portions 424, 425 face each other with a space therebetween. The first and second arms 422, 423 and the first and second contact portions 424, 425 are located in the connection hole 411 a of the connecting portion 411. That is, the first and second arms 422, 423 and the first and second contact portions 424, 425 correspond to "a portion" of the terminal as defined in the claims.

Each tail 426 is contiguous with the other Y-direction end of each terminal body 421 and extends to the other Y-direction side. The tails 426 are connected to electrodes (not shown) on the second face 220 of the circuit board 200.

The fixed terminals 430 are metal plates of generally L-shape. The fixed terminals 430 each include a first fixed plate and a second fixed plate bent at almost right angle to the first fixed plate. The first fixed plate of one of the fixed terminals 430 is fixed to one X-direction end of the base 412 of the body 410, and the first fixed plate of the other fixed terminal 430 is fixed to the other X-direction end of the base 412 of the body 410. The second fixed plates of the fixed terminals 430 are soldered to ground electrodes on the second face 220 of the circuit board 200.

The component module M configured as described above may be manufactured as follows. The first step is to prepare the circuit board 200, the electronic component 300, and the connector 400. The electronic component 300 is mounted on the first face 210 of the circuit board 200, and the connector 400 is mounted on the second face 220 of the circuit board 200. In this mounting step, the tails 426 of the terminals 420 of the connector 400 are connected to the respective electrodes on the second face 220 of the circuit board 200, and the fixed terminals 430 are soldered to the respective ground electrodes on the second face 220 of the circuit board 200.

The second case 120 is also prepared. Into the second case 120 placed are the circuit board 200, the electronic component 300, and the connector 400, with the first face 210 of the circuit board 200 facing the bottom of the second case 120. The circuit board 200 is then fixed to the second case 120. Also prepared is the first case 110. The first case 110 is combined with the second case 120. Specifically, the peripheral wall of the first case 110 and the peripheral wall of the second case 120 are butted against and welded to each other. The first and second cases 110, 120 are combined such that the distal portion of the connecting portion 411 of the connector 400 is housed in the housing recess 115 of the first case 110 and faces the through-hole 111 of the first case 110. The connection hole 411 a of the connecting portion 411 thus faces the through-hole 111.

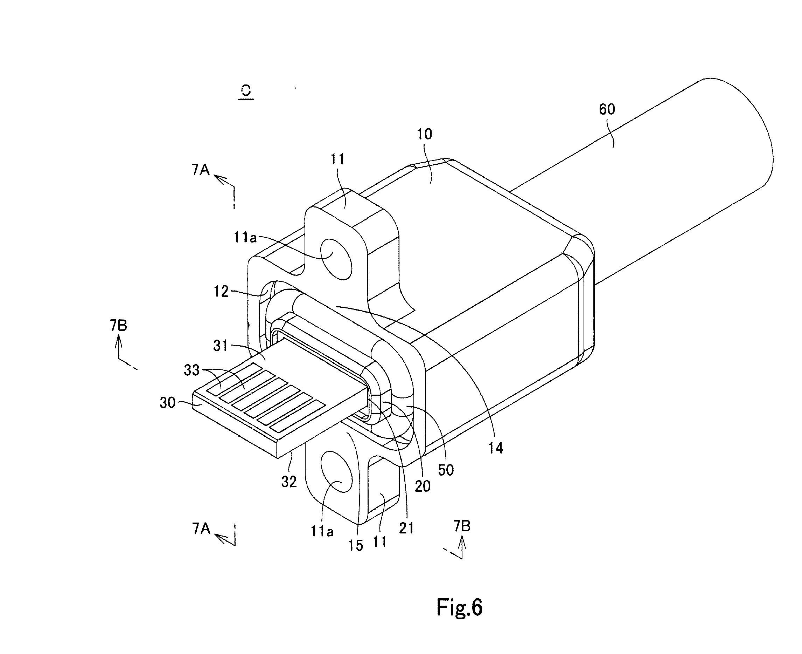

Now referring to Figs. 6 to 8B, the mating connector C will be described. The mating connector C is a plug connector. The mating connector C includes a housing 10, a holder 20, a connecting circuit board 30, a plastic portion 40, a sealing member 50, and a cable 60.

The connecting circuit board 30 is a printed circuit board as shown in Figs. 6 to 8B. The connecting circuit board 30 has a first face 31, a second face 32, a plurality of first conductors 33, a plurality of second conductors 34, a plurality of third conductors 35, a plurality of fourth conductors 36, and a pair of locking projections 37. The first face 31 is one face in the Z direction (thickness direction) of the connecting circuit board 30. The second face 32 is the other face in the Z direction (thickness direction) (opposite face to the first face 31) of the connecting circuit board 30.

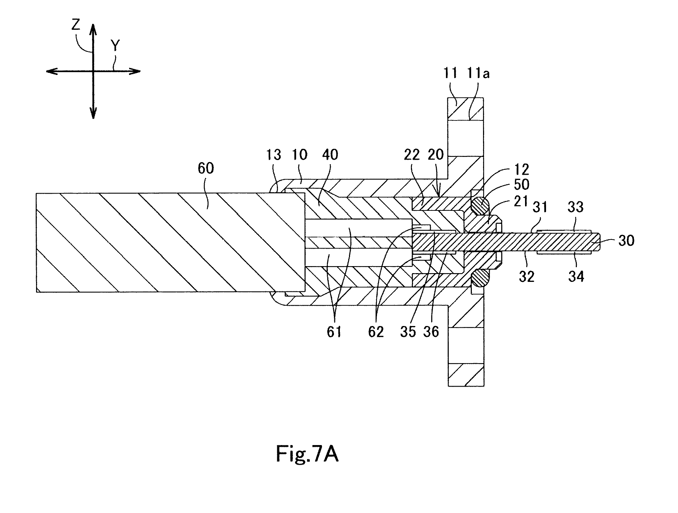

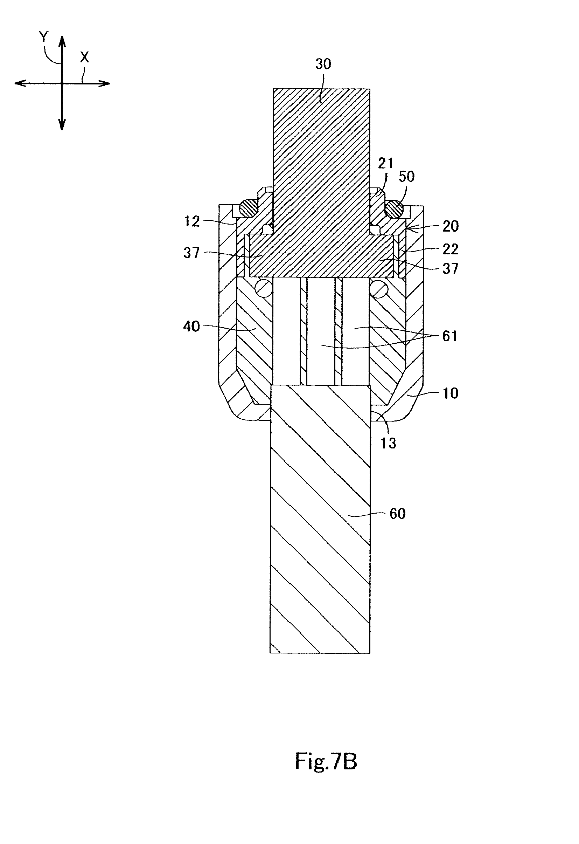

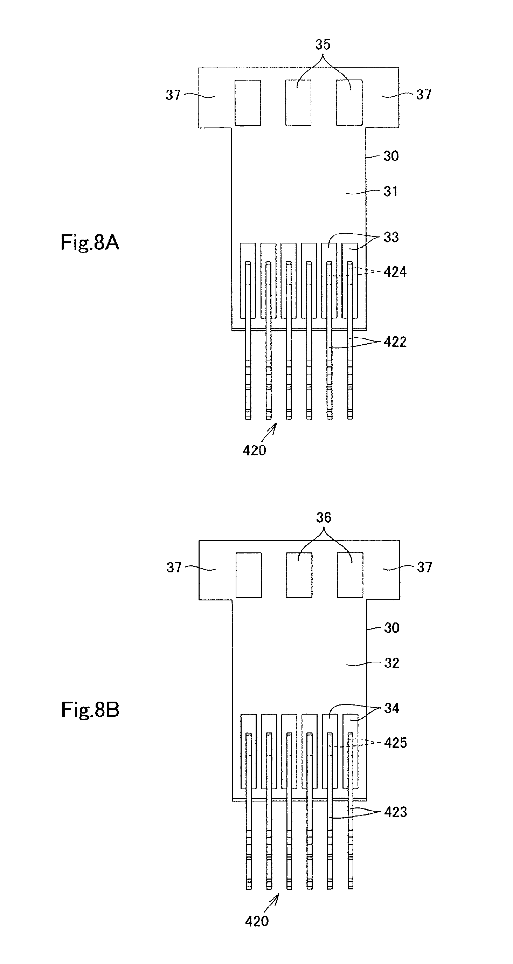

As shown in Fig. 7A and Fig. 8A, the third conductors 35 are thin films arranged at intervals along the X direction on one Y-direction end of the first face 31 of the connecting circuit board 30. The first conductors 33 are thin films arranged at intervals along the X direction on the other Y-direction end of the first face 31 of the connecting circuit board 30. As shown in Fig. 7B to Fig. 8B, the one Y-direction end of the connecting circuit board 30 is provided with the locking projections 37 projecting from its opposite X-direction ends. As shown in Fig. 7A and Fig. 8B, the fourth conductors 36 are thin films arranged at intervals along the X direction on one Y-direction end of the second face 32 of the connecting circuit board 30. The second conductors 34 are thin films arranged at intervals along the X direction on the other Y-direction end of the second face 32 of the connecting circuit board 30. Each first conductor 33 has a larger lengthwise dimension (Y-direction dimension) and a larger widthwise dimension (X-direction dimension) than those of each first contact portion 424. Each second conductor 34 has a larger lengthwise dimension (Y-direction dimension) and a larger widthwise dimension (X-direction dimension) than those of each second contact portion 425. It should be appreciated that Figs. 2 and 7A illustrate the first and second conductors 33, 34 and the third and fourth conductors 35, 36 with exaggerated thickness dimensions (Z-direction dimensions) for convenience of illustration.

The holder 20 is an insulating resin tube as shown in Figs. 7A and 7B. The holder 20 includes a front portion 21 and a rear portion 22. The front portion 21 is a square tube. The connecting circuit board 30 extends through the front portion 21 in a secure manner. As such, the inner shape of the front portion 21 conforms to the outer shape of the connecting circuit board 30. The rear portion 22 is a square tube contiguous with one Y-direction end of the front portion 21, and the inside of the rear portion 22 communicates with the inside of the front portion 21. The rear portion 22 has larger inner dimensions and larger outer dimensions than the front portion 21. The rear portion 22 houses a Y-direction end portion of the connecting circuit board 30 and the locking projections 37. The locking projections 37 are locked against opposite X-direction corners of the rear portion 22. This prevents the connecting circuit board 30 from falling off from the holder 20 to the other Y-direction side.

The sealing member 50 is a generally rectangular elastic ring of silicon rubber or the like, as shown in Figs. 6 to 7B. The sealing member 50 fits around the front portion 21 of the holder 20. In other words, the connecting circuit board 30 extends through the sealing member 50.

The housing 10 is a generally square tube of insulating resin. One Y-direction end (basal portion) of the housing 10 has an opening 13, and the other Y-direction end (distal portion) of the housing 10 has an opening 12. The opening 13 receives therethrough the cable 60. That is, the cable 60 extends from the housing 10 in the Y direction. The cable 60 includes a plurality of signal wires 61 and an outer insulator that coats the signal wires 61. The signal wires 61 each include a core wire 62 and an inner insulator that coats the core wire 62. One lengthwise end of each signal wire 61 protrudes from the outer insulator. One lengthwise end of each core wire 62 protrudes from the end of each signal wire 61. The protruding portions of the core wires 62 are soldered to the third and fourth conductors 35, 36 of the connecting circuit board 30.

The opening 12 fits around the rear portion 22 of the holder 20. The one Y-direction end of the connecting circuit board 30 and the locking projections 37, which are housed in the rear portion 22 of the holder 20, are located inside the housing 10. Protruding from the opening 12 are the front portion 21 of the holder 20 and the portion of the connecting circuit board 30 excluding the aforementioned one end portion (hereinafter referred to as a protruding portion of the connecting circuit board 30). The housing 10 is filled with the plastic portion 40. Embedded in the plastic portion 40 are the one end portion of the connecting circuit board 30, the locking projections 37, the third and fourth conductors 35, 36, and one lengthwise end portion of the cable 60 (including the protruding portions of the signal wires 61 of the cable 60 and the protruding portions of the core wires 62). The plastic portion 40 is fixed to the housing 10 and the rear portion 22 of the holder 20.

The protruding portion of the connecting circuit board 30 has a slightly smaller X-direction dimension than that of the through-hole 111 of the first case 110 of the component module M. The protruding portion of the connecting circuit board 30 has a Z-direction dimension slightly smaller than that of the through-hole 111 of the case 100 of the component module M and slightly larger than the distance between the first and second contact portions 424, 425 of each terminal 420. The protruding portion of the connecting circuit board 30 thus configured can be inserted through the through-hole 111 of the case 100 of the component module M into the connection hole 411 a of the connecting portion 411 of the connector 400 and can be inserted further in between the first and second contact portions 424, 425 of each terminal 420 in the connection hole 411 a. The insertion of the connecting circuit board 30 between the first and second contact portions 424, 425 causes elastic deformation of the first and second arms 422, 423 of each terminal 420 in directions away from each other. The elastic forces of the first and second arms 422, 423 allow the first contact portions 424 to elastically contact the first conductors 33 on the first face 31 of the connecting circuit board 30 and the second contact portions 425 to elastically contact the second conductors 34 on the second face 32 of the connecting circuit board 30. The front portion 21 of the holder 20 has outer dimensions slightly smaller than the inner dimensions of the housing recess 114 in the first case 110 of the component module M. The front portion 21 of the holder 20 can be inserted into the housing recess 114 in the first case 110 of the component module M.

As shown in Fig. 6, the distal portion of the housing 10 includes a first end 14 on one Z-direction side and a second end 15 on the other Z-direction side (opposite side to the first end). The first end 14 is provided with a flange 11 extending to the one Z-direction side. The second end 15 is provided with another flange 11 extending to the other Z-direction side. The flanges 11 each have an attachment hole 11 a passing through the flange 11 in the Y direction. The outer shape of the distal portion plus the flanges 11 of the housing 10 conforms to the inner shape of the fitting recess 112 of the component module M. Accordingly, the distal portion and the flanges 11 of the housing 10 can fit into the fitting recess 112 of the component module M. In the state where the distal portion and the flanges 11 of the housing 10 fit in the fitting recess 112 of the component module M, the attachment holes 11a of the flanges 11 communicate with the respective attachment holes 113 of the component module M. Opposite corners of the first end 14 conform to the inner shapes of the first ends 131 of the guides 130 of the component module M. Opposite corners of the second end 15 have oblique faces conforming to the shape of the oblique portion 132a of the second ends 132 of the guides 130. Consequently, when a user tries to insert the second end 15 of the housing 10 between the first ends 131 of the guides 130 and insert the first end 14 of the housing 10 between the second ends 132 of the guides 130 (i.e. when a user tries to insert the housing in the inverted orientation), the first end 14 of the housing 10 abuts the oblique portions 132a of the second ends 132 of the guides 130, preventing the insertion of the housing 10.

The fasteners P are screws or pins as shown in Figs. 1 and 2. The fasteners P are insertable into and engageable with the attachment holes 11a of the housing 10 and the attachment holes 113 of the first case 110.

The mating connector C configured as described above may be manufactured as follows. The first step is to prepare the holder 20 and the connecting circuit board 30. Into the rear portion 22 and the front portion 21 of the holder 20 inserted is the protruding portion of the connecting circuit board 30. Then, the locking projections 37 of the connecting circuit board 30 are brought into abutment with the rear portion 22 of the holder 20, the one end portion and the locking projections 37 of the connecting circuit board 30 are housed in the rear portion 22, and the remaining portion (protruding portion) of the connecting circuit board 30 protrudes from the holder 20 to the other Y-direction side. The cable 60 is also prepared. The cable 60 is soldered at the core wires 62 of the signal wires 61 to the third and fourth conductors 35, 36 of the connecting circuit board 30.

After that, the one end portion and the locking projections 37 of the connecting circuit board 30, the rear portion 22 of the holder 20, the protruding portions of the signal wires 61 and the protruding portions of the core wires 62 of the cable 60 are placed into a die of an injection molding machine. Then, insulating resin is injected into the die to insert-mold in the insulating resin the one end portion (including the third and fourth conductors 35, 36) and the locking projections 37 of the connecting circuit board 30, the protruding portions of the signal wires 61 and the protruding portions of the core wires 62 of the cable 60 and weld the insulating resin to the rear portion 22 of the holder 20. The insulating resin solidifies to form the plastic portion 40. As a result, the one end portion (including the third and fourth conductors 35, 36) and the locking projections 37 of the connecting circuit board 30, the protruding portions of the signal wires 61 and the protruding portions of the core wires 62 of the cable 60 are embedded in the plastic portion 40, and the plastic portion 40 is fixed to the holder 20.

After that, the plastic portion 40, the rear portion 22 of the holder 20, and the lengthwise end portion of the cable 60 are placed into another die of the injection molding machine. Then, insulating resin is injected into the die to overmold the plastic portion 40, the rear portion 22 of the holder 20, and the end portion of the cable 60 in the form of a tube. The insulating resin solidifies to form the housing 10. After the molding process, the cable 60 is led out of the housing 10 through the opening 13 of the housing 10, and the protruding portion of the connecting circuit board 30 and the front portion 21 of the holder 20 protrude from the housing 10 through the opening 12 of the housing 10. The sealing member 50 is also prepared. Into the sealing member 50 fittingly engaged is the front portion 21 of the holder 20. As a result, the sealing member 50 fits around the front portion 21 of the holder 20 and the connecting circuit board 30 extends through the sealing member 50.

The mating connector C may be connected to the component module M in the following manner. As shown in Fig. 2, the protruding portion of the connecting circuit board 30 of the mating connector C is inserted through the through-hole 111 of the component module M and then into the connection hole 411 a of the connector 400. In the inserted the mating connector C, the distal portion of the housing 10 is received in the guides 130, and the distal portion and the flanges 11 of the housing 10 fit in the fitting recess 112 of the component module M. As a result, the sealing member 50 is compressed between the holder 20 and the first case 110 of the component module M.

Simultaneously, the protruding portion of the connecting circuit board 30 is received between the first and second contact portions 424, 425 of the terminals 420 in the connection hole 411 a of the connector 400. As a result, the first and second arms 422, 423 of the terminals 420 are elastically deformed in directions away from each other, and the first and second contact portions 424, 245 elastically hold therebetween the protruding portion of the connecting circuit board 30. Also, the first contact portions 424 elastically contact the first conductors 33 on the first face 31 of the connecting circuit board 30, and the second contact portions 425 elastically contact the second conductors 34 on the second face 32 of the connecting circuit board 30. The mating connector C is thus connected to the component module M.

The fasteners P are also prepared. The fasteners P are inserted into and engaged with the attachment holes 11 a of the housing 10 and the attachment holes 113 of the first case 110. The fasteners P thus maintain the connection between the mating connector C and the component module M, making it possible to maintain the connection strength and waterproofness between the mating connector C and the component module M.

The above-described connection structure has at least the following technical features. First, it is possible to reduce the number of components and the man-hours for assembling the component module M and miniaturize the component module M because of the following configurations. The connector 400 of the component module M is directly mounted on the circuit board 200 in the case 100. The connecting portion 411 is disposed to face the through-hole 111 of the case 100 to connect the connecting portion 411 of the connector 400 to the connecting circuit board 30 of the mating connector C. This makes it possible to omit a component for connecting the connector 400 to the circuit board 200. Second, it is also possible to reduce the number of components and man-hours for assembling the mating connector C and miniaturize the mating connector C because of the following configurations. In the mating connector C, the connecting circuit board 30 is used as a member for connection with the component module M. The decreased X-direction distances between the first and second conductors 33, 34 on the first and second faces 31, 32, respectively, of the connecting circuit board 30 result in decreased X-direction dimension of the connecting circuit board 30.

Third, the connection structure can absorb the wobbling of the mating connector C in the Z direction (the thickness direction of the connecting circuit board 30) when inserting the connecting circuit board 30 of the mating connector C into the connection hole 411a of the connector 400. This is because the connecting circuit board 30 of the mating connector C is elastically held between the first and second contact portions 424, 425 of the terminals 420 in the connection hole 411 a of the connector 400. Fourth, the connection structure can absorb the wobbling of the mating connector C also in the Y and X directions when inserting the connecting circuit board 30 of the mating connector C into the connection hole 411 a of the connector 400 for the following reasons. The first conductor 33 has a larger lengthwise dimension (Y-direction dimension) and a larger widthwise dimension (X-direction dimension) than those of the first contact portion 424, and the second conductor 34 has a larger lengthwise dimension (Y-direction dimension) and a larger widthwise dimension (X-direction dimension) than those of the second contact portion 425. These configurations can ensure contact state of the first and second conductors 33, 34 with the first and second contact portions 424, 425 in the Y and X directions when inserting the connecting circuit board 30 of the mating connector C into the connection hole 411 a of the connector 400.

Fifth, the connection structure has improved reliability of connection between the mating connector C and the component module M for the following reasons. The first and second contact portions 424, 425 of the terminals 420 of the component module M elastically contact the first and second conductors 33, 34, respectively, on the connecting circuit board 30 of the mating connector C. The Y- and X-direction dimensions of the first and second conductors 33, 34 are as described above. Therefore, even when the mating connector C and the component module M mated therewith are under physical shock and/or vibration, the first and second arms 422, 423 of the terminals 420 elastically deform in the Z direction to maintain the contact state of the first and second conductors 33, 34 with the first and second contact portions 424, 425.

Sixth, the component module M has improved waterproofness. Some conventional component modules have first and second cases filled with sealant. Such component modules may suffer from reduced waterproofness of the component module due to deterioration in fixing property of the sealant which may be caused by vibration generated during the welding of the first and second cases. This is in contrast with the component module M that has the first and second cases 110, 120 that are not filled with sealant. The component module M is less likely to suffer from reduced waterproofness by welding the first and second cases 110, 120 together. Seventh, the connection structure also has improved waterproofness between the mating connector C and the component module M. This is because the sealing member 50 of the mating connector C is compressed between the holder 20 and the case 100. Eighth, the mating connector C also has improved waterproofness. This is because the housing 10 of the mating connector C is formed by overmolding so as to cover the plastic portion 40, the rear portion 22 of the holder 20, and the end portion of the cable 60.

The component module and the mating connector are not limited to the above-mentioned embodiment but may be modified in any manner within the scope of the claims. Some of specific modifications will be described below in detail.

The case 100 of the component module M of the above embodiment includes the first case 110, the second case 120, and the two guides 130. The case of the component module of the invention may be any case that has a through-hole and is configured to house the circuit board, the electronic component mounted on the circuit board, and the connector mounted on the circuit board. The first and second cases may be combined in the Y direction, in the X direction or in the Z direction.

In the above embodiment, the through-hole 111 of the case 100 of the component module M is a rectangular hole passing from the bottom of the housing recess 114 to the bottom of the housing recess 115. The through-hole of the case of the component module of the invention may be any hole passing through the case. For example, the through-hole may extend from the outer face to the inner face of the bottom of the first case. Alternatively, the through-hole may extend from the bottom of the housing recess 114 to the inner face of the bottom of the first case. The through-hole may extend from the outer face of the bottom of the first case to the bottom of the housing recess 115. The fitting recess 112, the attachment holes 113, the housing recess 114, and/or the housing recess 115 may be omitted.

In the above embodiment, the guides 130 of the case 100 of the component module M are protrusions on the first case 110. However, the guides 130 may be omitted. The guide of the component module of the invention may be any protrusion or recess around the through-hole of the case and may guide the mating connector into the through-hole of the case. In the above embodiment, the first and second ends 131, 132 of the guides 130 are different from each other in shape. However, the first and second ends of the guide of the component module of the invention may be of the same shape.

The circuit board 200 of the component module M of the above embodiment is fixed to the second case 120. The circuit board of the component module of the invention may be provided in the case. For example, the circuit board of the component module may be fixed to at least one of the first and second cases such that the connection portion of the connector is opposed to or located inside the through-hole of the first case. Alternatively, the circuit board may be fixed to at least one of the first and second cases via a separate member such that the connection portion of the connector is opposed to or located inside the through-hole of the first case. The connector and the electronic component may be mounted on a same face of the circuit board of the embodiment and the modification examples described above.

In the above embodiment, the connecting portion 411 of the connector 400 of the component module M is a square tube with the connection hole 411 a. However, the connection portion of the connector of the component module of the invention may be any insulating member at which at least a portion of the terminal is located. For example, the connecting portion of the connector may be an insulating resin plate. In this case, a portion of the terminal may be received in a groove or slit formed in at least one of first and second faces in the thickness direction of the connecting portion.

In the above embodiment, the terminals 420 of the connector 400 of the component module M each have the terminal body 421, the first and second arms 422, 423, the first and second contact portions 424, 425, and the tail 426. However, the connector of the component module of the invention may include at least one terminal connected to the circuit board such that a portion of the terminal is provided at the connecting portion in a contactable manner with the mating connector. For example, the terminal may include an arm provided at the connecting portion, a contact portion provided at the arm and located in the connection hole of the connecting portion, and a tail connected to the circuit board. The terminal of the invention may include first and second arms, first and second contact portions, and a tail connected to the circuit board. The first and second arms may be housed in slits provided in inner faces of the connection hole of the connecting portion. The first contact portion may be provided at the first arm and located in the connection hole of the connecting portion. The second contact portion may be provided at the second arm and located in the connection hole of the connecting portion. If the connecting portion is an insulating resin plate as mentioned above, the terminal may include an arm received in a groove or slit in the connecting portion, a contact portion provided at the arm so as to protrude from the groove or slit, and a tail connected to the circuit board. Alternatively, the terminal may include first and second arms received in first and second grooves or slits in the first and second faces of the connecting portion, respectively, first and second contact portions provided at the first and second arms so as to protrude from the first and second grooves or slits, respectively, and a tail connected to the circuit board.

In the above embodiment, the fixed terminals 430 of the connector 400 of the component module M are fixed to one and the other X-direction ends of the body 410. However, the fixed terminals 430 may be omitted. When the fixed terminals are omitted, the connector may be locked to the circuit board by a locking piece on the body of the connector. As a matter of course, the locking piece and the fixed terminal may both be provided on the body of the connector.

The electronic component 300 of the above embodiment is a camera unit. However, the electronic component of the component module of the invention may be any other kind of automotive electrical component or any other kind of electronic component. For example, the electronic component may be a camera, a microphone, a speaker, a sensor, a switch, a microphone unit, a speaker unit, a sensor unit, or a switch unit.

The mating connector C of the above embodiment includes the housing 10, the holder 20, the connecting circuit board 30, the plastic portion 40, the sealing member 50, and the cable 60. The mating connector of the invention may be of any configurations if connectable to the connecting portion of the connector of the component module of the embodiment or the above modification examples. For example, the mating connector may include a connecting circuit board insertable through the through-hole of the case of the component module into the connection hole of the connector of the component module, and the connecting circuit board may have a conductor on its face that is contactable with the portion of the terminal of the connector in the connection hole. The mating connector may have an insulating resin body and a terminal held in the body to contact the terminal of the connector of the component module. The mating connector may be a plug connector or may be a receptacle connector. If the mating connector is a receptacle connector, it may be mounted on a mounting circuit board, to which a terminal or terminals of the receptacle connector may be connected.

In the above embodiment, the connecting circuit board 30 of the mating connector C includes the first face 31, the second face 32, the plurality of first and second conductors 33, 34, the plurality of third and fourth conductors 35, 36, and the pair of locking projections 37. However, the connecting circuit board of the mating connector of the invention may be any connecting circuit board on which at least one conductor contactable with an associated terminal of the component module is provided. If the mating connector is a receptacle connector as mentioned above, the connecting circuit board may be connected to the mounting circuit board by connecting means such as a connecting terminal, a pin, a cable, an FPC (flexible printed circuit) or an FFC (flexible flat cable). The third and fourth conductors 35, 36 and/or the locking projections 37 may be omitted.

In the above embodiment, the sealing member 50 of the mating connector C fits around the front portion 21 of the holder 20. However, the sealing member can be omitted. Alternatively, the sealing member of the mating connector of the invention may be any elastic member interposed between the mating connector and the component module connected thereto. For example, the sealing member may be a loop-shaped elastic member adapted to receive the connecting circuit board. The sealing member may also be provided around the through-hole of the case of the component module.

The cable 60 of the above embodiment extends from the housing 10 in the Y direction. However, the cable may be omitted. The cable of the mating connector of the invention may extend from the housing in the X direction. Specifically, the cable may be pulled out from an opening at one or the other X-direction end of the housing of the mating connector. This modification can reduce the Y-direction dimension (fitting height) of the housing of the mating connector.

The fasteners P of the above embodiment are screws or pins. However, the fasteners may be omitted. The fasteners of the invention may be at least one fastener configured to fasten the component module to the mating connector in the connected state. For example, the fastener may be a snap spring or any other biasing member interposed between the component module and the mating connector. Such a biasing member can maintain the connection between the component module and the mating connector by its biasing force. The fastener may be a screw or an adhesive.

It should be appreciated that the embodiments and modifications are described above by way of examples only. The materials, shapes, dimensions, numbers, arrangements, and other configurations of the constituents of the component module and the mating connector may be modified in any manner if they can perform similar functions. The configurations of the above embodiment and modification examples can be combined in any feasible manner. The Y, X, and Z directions may be any relative directions with respect to the component module and the mating connector.

### Reference Signs List

M: component module

```
 100: case
         110: first case
                 111: through-hole
                 112: fitting recess
                 113: attachment hole
                 114: housing recess
                 115: housing recess
         120: second case
         130: guide
                 131: first end
                 132: second end
                         132a: oblique portion
 200: built-in circuit board (circuit board of component module)
         210: first face
         220: second face
 300: electronic component
 400: built-in connector (connector of component module)
         410: body
                 411: connecting portion
                         411 a: connection hole
                 412: base
                         412a: slit
        420: terminal
                 421: terminal body
                 422: first arm (a portion of terminal)
                 423: second arm (a portion of terminal)
                 424: first contact portion (a portion of terminal)
                 425: second contact portion (a portion of terminal)
                 426: tail
        430: fixed terminal
 C: mating connector
         10: housing
         20: holder
         30: connecting circuit board
                 31: first face
                 32: second face
                 33: first conductor
                 34: second conductor
                 35: third conductor
                 36: fourth conductor
         40: plastic portion
         50: sealing member
         60: cable
```

## Claims

1. A component module (M) comprising:
a case (100) having a through-hole (111);
a circuit board (200) provided in the case;
an electronic component (300) mounted on the circuit board; and
a connector (400) mounted on the circuit board, the connector including:
a connecting portion (411) opposed to or located inside the through-hole of the case; and
a terminal (420), at least a portion (422,423,424,425) of the terminal being located at the connecting portion.

2. The component module (M) according to claim 1, wherein
the connecting portion (411) has a connection hole (411 a), and
the portion (422,423,424,425) of the terminal (420) is located in the connection hole of the connecting portion.

3. The component module (M) according to claim 2, wherein
the terminal (420) includes:
first (422) and second (423) arms;
a first contact portion (424) provided at the first arm, the first contact portion being located in the connection hole (411 a) of the connecting portion (411); and
a second contact portion (425) provided at the second arm, the second contact portion being located in the connection hole of the connecting portion, and
the first and second contact portions are configured to receive therebetween a connecting circuit board (30) of a mating connector (C) such that the first contact portion is elastically contactable with a first conductor (33) on a first face (31) in a thickness direction of the connecting circuit board and the second contact portion is elastically contactable with a second conductor (34) on a second face (32) of the connecting circuit board in the thickness direction.

4. The component module (M) according to any of claims 1 to 3, wherein
the case (100) includes:
a first case (110) having the through-hole (111); and
a second case (120) configured to be fixed to the first case, and
the circuit board (200) of the component module is fixed to at least one of the first case and the second case.

5. The component module (M) according to any of claims 1 to 4, wherein
the circuit board (200) of the component module includes;
a first face (210), the electronic component being mounted on the first face; and
a second face (220) on the opposite side to the first face, the connector (400) of the component module being mounted on the second face.

6. The component module (M) according to any of claims 1 to 5, wherein
the case (100) further includes a guide (130) comprising a protrusion or a recess around the through-hole (111), and
the guide includes:
a first end (131); and
a second end (132) on the opposite side to the first end, the second end being of different shape from the first end.

7. A mating connector (C) connectable to the component module (M) according to claim 2, the mating connector comprising a connecting circuit board (30), the connecting circuit board being insertable through the through-hole (111) of the case (100) of the component module into the connection hole (411a) of the connector (400) of the component module, the connecting circuit board including a conductor on a face of the connecting circuit board, the conductor being contactable with the portion (422,423,424,425) of the terminal (420) in the connection hole.

8. A mating connector (C) connectable to the component module (M) according to claim 3, the mating connector comprising a connecting circuit board (30), the connecting circuit board being insertable through the through-hole (111) of the case (100) of the component module into the connection hole (411a) of the connector (400) of the component module, the connecting circuit board including:
a first face (31) in the thickness direction;
a second face (32) on the opposite side to the first face;
a first conductor (33) provided on the first face of the connecting circuit board, the first conductor being contactable with the first contact portion (424) in the connection hole; and
a second conductor (34) provided on the second face of the connecting circuit board, the second conductor being contactable with the second contact portion (425) in the connection hole.

9. A mating connector (C) according to claim 8, wherein
the first conductor (33) of the connecting circuit board (30) has larger lengthwise and widthwise dimensions than those of the first contact portion (424), and
the second conductor (34) of the connecting circuit board has larger lengthwise and widthwise dimensions than those of the second contact portion (425).

10. A connection structure comprising:
a component module (M); and
a mating connector (C),
the component module including:
a case (100) having a through-hole (111);
a circuit board (200) provided in the case;
an electronic component (300) mounted on the circuit board; and
a connector (400) mounted on the circuit board, the connector including:
a connecting portion (411) opposed to or located inside the through-hole of the case;
a connection hole (411a) provided in the connecting portion; and
a terminal (400), at least a portion (422,423,424,425) of the terminal being located in the connecting portion,
the mating connector including a connecting circuit board (30), the connecting circuit board being insertable through the through-hole of the case of the component module into the connection hole of the connector of the component module, the connecting circuit board including a conductor (33, 34) on a face (31, 32) of the connecting circuit board, the conductor being contactable with the portion of the terminal in the connection hole.

11. The connection structure according to claim 10, wherein
the terminal (400) includes:
first (422) and second (423) arms;
a first contact portion (424) provided at the first arm, the first contact portion being located in the connection hole (411a) of the connecting portion (411); and
a second contact portion (425) provided at the second arm, the second contact portion being located in the connection hole of the connecting portion,
the face (31,32) of the connecting circuit board (30) comprises:
a first face (31) in a thickness direction of the connecting circuit board; and
a second face (32) on the opposite side to the first face, and
the conductor (33,34) comprises:
a first conductor (33) provided on the first face of the connecting circuit board, the first conductor being contactable with the first contact portion in the connection hole; and
a second conductor (34) provided on the second face of the connecting circuit board, the second conductor being contactable with the second contact portion in the connection hole.

12. The connection structure according to claim 11, wherein
the first conductor (33) has larger lengthwise and widthwise dimensions than those of the first contact portion (424), and
the second conductor (34) has larger lengthwise and widthwise dimensions than those of the second contact portion (425).

13. The connection structure according to any of claims 10 to 12, wherein
the case (100) further includes a guide (130) comprising a protrusion or a recess around the through-hole (111), and
the guide includes:
a first end (131); and
a second end (132) on the opposite side to the first end, the second end being of different shape from the first end, and
the mating connector (C) includes:
a first end having an outer shape conforming to an inner shape of the first end of the guide; and
a second end on the opposite side to the first end of the mating connector, the second end having an outer shape conforming to an inner shape of the second end of the guide.

14. The connection structure according to any of claims 10 to 13, wherein
the mating connector (C) further includes a sealing member (50) being a loop-shaped elastic body to receive the connecting circuit board (30), the sealing member being pressed onto the case (100) of the component module (M) when the connecting circuit board is received in the connection hole (411a) of the connector (400) of the component module.

15. The connection structure according to any of claims 10 to 14, further comprising a fastener (P) configured to fasten to the case (100) the mating connector (C) as received in the through-hole (111) of the case of the component module (M) and connected to the connecting portion (411) of the connector (400) of the component module.
